# EUROPÄISCHE PATENTSCHRIFT

(11) **EP 1 695 871 B1**
(45) Veröffentlichungstag und Bekanntmachung des Hinweises auf die Patenterteilung: **17.10.2007**
(21) Anmeldenummer: 06002523.6
(22) Anmeldetag: 08.02.2006
(51) Int. Cl.: B60R 5/04, B60J 1/20

(54) **Schutzvorrichtung für einen Fahrzeuginnenraum und Verfahren zu ihrer Herstellung**
Protection device for vehicle interior compartment and method of making same
Dispositif pour la protection d'un compartiment intérieur du véhicule et procédé pour sa fabrication

(30) Priorität: 24.02.2005 DE 102005009699
(43) Veröffentlichungstag der Anmeldung: 30.08.2006
(73) Patentinhaber: BOS GmbH & Co. KG, 73760 Ostfildern (DE)
(72) Erfinder: Belibel, Bouaziz, 73116 Wäschenbeuren (DE); Krückemeier, Achim, 70794 Filderstadt (DE)
(74) Vertreter: Patentanwälte Ruff, Wilhelm, Beier, Dauster & Partner

(56) Entgegenhaltungen:
- DE-A1- 10 310 368
- DE-A1- 19 534 252
- DE-U1- 20 121 910
- FR-A- 2 152 934

## Beschreibung

Die Erfindung betrifft eine Schutzvorrichtung für einen Fahrzeuginnenraum mit einem flexiblen Flächengebilde, sowie ein Verfahren zur Herstellung einer derartigen Schutzvorrichtung.

Eine Schutzvorrichtung für einen Fahrzeuginnenraum ist in Form einer Laderaumabdeckung aus der EP 01 433 660 A1 bekannt. Die bekannte Laderaumabdeckung weist ein flexibles Flächengebilde in Form eines Malivlieses auf, das an einem Stirnendbereich an einer Wickelwelle befestigt und an einem gegenüberliegenden Stirnendbereich mit einem Auszugprofil verbunden ist.

Die DE 19534252 A1 betrifft ein Verfahren zur Herstellung einer mehrlagigen Bahn, das als Polsterbezugsmaterial für Fahrzeugsitze dient. Die mehrlagige Bahn weist einen außenliegenden Bezug und einen darunter liegenden Vliesstoff auf.

Aus der DE 20121910 U1 ist eine Montageeinheit zum Ultraschallverschweißen mit einem Kraftfahrzeugbauteil in Form eines Dachhimmels, eines Tür-Moduls oder eines Cockpit-Moduls bekannt. Die Montageeinheit umfasst einen Vlieswerkstoff, der einseitig mit einer Klebebeschichtung versehen ist, um die elektrische Leitung zu befestigen.

Es ist auch bekannt (FR 2152934), ein Malivlies mit einer PVC-Schicht zu verbinden.

Aufgabe der Erfindung ist es, eine Schutzvorrichtung und ein Verfahren der eingangs genannten Art zu schaffen, die eine einfache und kostengünstige Verbindung des Flächengebildes mit angrenzenden Bauteilen wie insbesondere Wickelwelle oder Auszugprofil ermöglichen.

Diese Aufgabe wird für die Schutzvorrichtung dadurch gelöst, dass das Flächengebilde mehrlagig aus einem Trägervlies und einer aufgebrachten, schweißbaren Kunststoffschicht als Decklage gebildet ist. Vorzugsweise ist das Flächengebilde zweilagig aufgebaut. Es kann aber neben den beschriebenen beiden Lagen auch noch wenigstens eine weitere Lage vorhanden sein. Das Trägervlies kann als Malivlies oder Maliwatt ausgebildet sein. Alternativ kann das Trägervlies als andersartiges, insbesondere nadel- oder wasserstrahlverfestigtes Vliesgebilde gestaltet sein. Es ist auch vorteilhaft, ein derartiges Vliesgebilde mit einer zusätzlichen Vernähung durch einen Nähfaden zu versehen. Derartige Trägervliese sind insbesondere im Vergleich zu Geweben oder Gewirken kostengünstig und weisen dennoch eine ausreichende Steifigkeit und Festigkeit auf, um als Trägermaterial für das Flächengebilde zu dienen. Die aufgebrachte Kunststoffschicht muss keine eigene Tragfunktion aufweisen und kann demzufolge relativ dünn ausgeführt sein. Die Schweißbarkeit der Kunststoffschicht ermöglicht eine einfache Anbindung des Flächengebildes an angrenzende Bauteile wie insbesondere ein Auszugprofil, ein Konturteil oder ähnliches. Es ist vorteilhaft möglich, einen Überzug für ein derartiges Konturteil aus dem gleichen Kunststoffmaterial herzustellen und eine einfache Verschweißung mit der Kunststoffschicht des Flächengebildes zu erzielen. Besonders vorteilhaft ist als Kunststoffschicht eine PVC-Schicht vorgesehen. Denn die PVC-Schicht ist schweißbar und kostengünstig.Die Kunststoffschicht kann in gewünschter Weise insbesondere zu Designzwecken eingefärbt und strukturiert werden. Bei dem Einsatz von PVC oder einem anderen Kunststoffmaterial ist eine ausreichende Flammfestigkeit und eine Lichtechtheit erreichbar. Der Einsatz des Trägervlieses ermöglicht ein gedämpftes Abrollgeräusch beim Auf- oder Abwickeln des Flächengebildes relativ zu der Wickelwelle. Schutzvorrichtungen im Sinne der Erfindung sind insbesondere Laderaumabdeckungen für Kraftfahrzeuge, insbesondere für Personenkraftwagen, aber auch Sonnen- oder Lichtschutzvorrichtungen im Bereich von Glasdächern oder von seitlichen oder heckseitigen Scheibenbereichen des Kraftfahrzeugs, um eine Beschattung, insbesondere in Form einer Vollbeschattung, zu ermöglichen.

In besonders vorteilhafter Weise ist die Kunststoffschicht durch eine PVC-Schicht gebildet. Diese ist insbesondere durch Kaschieren, durch Kalandern, durch Streichen oder auch durch Aufextrudieren in flüssiger Form auf das Trägervlies aufgebracht, wodurch ein sehr dünner und gleichmäßiger Schichtauftrag erzielbar ist. Hierdurch ergibt sich eine erhebliche Gewichtsreduzierung für das Flächengebilde.

In weiterer Ausgestaltung der Erfindung ist die Kunststoffschicht durch eine Kunststofffolie gebildet. Diese Kunststofffolie ist vorzugsweise eine PVC-Folie. Die Kunststofffolie kann in vorteilhafter Weise mit dem Trägervlies verbunden, insbesondere verklebt sein. Zur Verklebung können Klebeschichten eingesetzt werden, die entweder bereits auf der Kunststofffolie vorhanden sind oder beim Zusammenführen der beiden Lagen durch entsprechende Auftragsverfahren aufgebracht werden.

Für das Verfahren zur Herstellung dieser Schutzvorrichtung, wobei das Flächengebilde an einem Stirnendbereich auf einer Wickelwelle auf- und abwickelbar befestigt und an seinem anderen Stirnendbereich mit einem Auszugprofil verbunden wird, wird die der Erfindung zugrundeliegende Aufgabe dadurch gelöst, dass zunächst ein Trägervlies fertiggestellt wird, auf das anschließend eine Kunststoffschicht in flüssiger Form aufgebracht wird. Hierdurch ist es möglich, einen besonders dünnen und dennoch gleichmäßigen Schichtauftrag zu erzielen, wodurch zum einen eine Kostenreduzierung und zum anderen eine Gewichtsreduzierung gegenüber herkömmlichen PVC-Flächengebilden für Laderaumabdeckungen erzielt wird. In vorteilhafter Weise erfolgt ein Schichtauftrag durch Kalandrieren.

In Ausgestaltung des Verfahrens wird die Kunststoffschicht durch Rakeln oder Streichen aufgebracht. Hier kann in besonders vorteilhafter Weise in einem kontinuierlichen Herstellungsvorgang das Flächengebilde geschaffen werden. Dabei wird das Vlies mit dem Kunststoff getränkt, wodurch die Schweißbarkeit des Flächengebildes erhöht wird.

Alternativ ist vorgesehen, die Kunststoffschicht durch Extrudieren aufzubringen.

Erfindungsgemäß wird zunächst das Trägervlies hergestellt, indem ein geeigneter Faserflor durch Nadel- oder Wasserstrahlverfestigung zu dem Vliesgebilde verfestigt wird. Nach der Fertigstellung des Trägervlieses wird dann die Kunststoffschicht aufgebracht.

Dadurch, dass die Schutzvorrichtung ein Flächengebilde aufweist, das unterseitig mit dem Trägervlies und oberseitig mit der Kunststoffschicht versehen ist, liegen in aufgewickeltem Zustand auf der Wickelwelle jeweils immer eine Trägervlieswickellage und eine Kunststoffschichtwickellage aufeinander. Ein Verkleben im aufgewickelten Zustand wird hierdurch zuverlässig vermieden, so dass neben dem angenehmen und leisen Abrollgeräusch beim Auf- und Abwickeln auch gleichmäßige Aufwickel- oder Abzugskräfte gewährleistet sind. Zudem wird auch in aufgewickeltem Zustand ein Verkleben vermieden, so dass eine lange Lagerfähigkeit des aufgerollten Flächengebildes gegeben ist. Die durch die Kunststoffschicht gebildete Decklage ermöglicht insbesondere eine Anpassung an Dekor- oder Designgestaltungen der übrigen Innenraumverkleidung des Kraftfahrzeugs, so dass auch im Bereich der Schutzvorrichtung sich ein einheitlicher Gesamteindruck des Fahrzeuginnenraumes fortsetzen kann. So lässt sich insbesondere eine Anpassung an die Farbe und die Narbung des Innenraum-Design-Konzeptes erreichen.

## Patentansprüche

1. Schutzvorrichtung für einen Fahrzeuginnenraum mit einem flexiblen Flächengebilde, das an einem Stirnendbereich auf einer Wickelwelle auf- und abwickelbar gehalten und an seinem anderen Stirnendbereich mit einem Auszugprofil verbunden ist, **dadurch gekennzeichnet, dass** das Flächengebilde mehrlagig aus einem Trägervlies und einer aufgebrachten, schweißbaren Kunststoffschicht als Decklage gebildet ist.

2. Schutzvorrichtung nach Anspruch 1, **dadurch gekennzeichnet, dass** die Kunststoffschicht durch eine PVC-Schicht gebildet ist.

3. Schutzvorrichtung nach Anspruch 1, **dadurch gekennzeichnet, dass** als Trägervlies ein Malivlies oder ein Maliwatt vorgesehen ist.

4. Schutzvorrichtung nach Anspruch 1, **dadurch gekennzeichnet, dass** die Kunststoffschicht durch eine Kunststofffolie gebildet ist.

5. Schutzvorrichtung nach Anspruch 4, **dadurch gekennzeichnet, dass** die Kunststofffolie als PVC-Folie gestaltet ist.

6. Schutzvorrichtung nach Anspruch 4 oder 5, **dadurch gekennzeichnet, dass** die Kunststofffolie mit dem Trägervlies verbunden, insbesondere verklebt ist.

7. Schutzvorrichtung nach Anspruch 1, **dadurch gekennzeichnet, dass** das Trägervlies durch Nadel- oder Wasserstrahlverfestigung hergestellt ist.

8. Schutzvorrichtung nach Anspruch 7, **dadurch gekennzeichnet, dass** das Trägervlies zusätzlich mittels eines Nähfadens vernäht ist.

9. Verfahren zur Herstellung einer Schutzvorrichtung nach einem der vorhergehenden Ansprüche wobei zunächst ein Trägervlies fertiggestellt wird, anschließend eine als Decklage dienende Kunststoffschicht auf das fertiggestellte Trägervlies in flüssiger Form aufgebracht wird, und danach das flexible Flächengebild an einem Stirnendbereich auf einer Wickelwelle auf- und abwickelbar befestigt ist und an seinem anderen Stirnendbereich mit einem Auszugprofil verbunden wird.

10. Verfahren nach Anspruch 9, **dadurch gekennzeichnet, dass** die Kunststoffschicht durch Rakeln aufgebracht wird.

11. Verfahren nach Anspruch 9, **dadurch gekennzeichnet, dass** die Kunststoffschicht durch Extrudieren aufgebracht wird.

## Claims

1. Protective device for the passenger compartment of a vehicle with a flexible sheet-like structure, which is held, in the region of one extreme end, on a winding shaft so as to be able to be wound and unwound and is connected, in the region of its other extreme end, to a drawing-out profile, **characterised in that** the sheet-like structure is formed in more than one layer from a non-woven backing and an applied, weldable layer of plastics material as a top layer.

2. Protective device according to claim 1, **characterised in that** the layer of plastics material is formed by a PVC layer.

3. Protective device according to claim 1, **characterised in that** a Malivlies or a Maliwatt is provided as the non-woven backing.

4. Protective device according to claim 1, **characterised in that** the layer of plastics material is formed by a film of plastics material.

5. Protective device according to claim 4, **characterised in that** the film of plastics material is constructed as a PVC film.

6. Protective device according to claim 4 or 5, **characterised in that** the film of plastics material is joined, in particular adhesively-bonded, to the non-woven backing.

7. Protective device according to claim 1, **characterised in that** the non-woven backing is produced by stitchbonding or hydroentanglement.

8. Protective device according to claim 7, **characterised in that** the non-woven backing is additionally stitched by means of a sewing thread.

9. Method for producing a protective device according to any one of the preceding claims, a non-woven backing first being produced, a layer of plastics material which acts as a top layer subsequently being applied to the finished non-woven backing in liquid form, and the flexible sheet-like structure then being fixed, in the region of one extreme end, on a winding shaft so as to be able to be wound and unwound and being connected, in the region of its other extreme end, to a drawing-out profile.

10. Method according to claim 9, **characterised in that** the layer of plastics material is applied by doctor-blading.

11. Method according to claim 9, **characterised in that** the layer of plastics material is applied by extrusion.

## Revendications

1. Dispositif de protection pour l'habitacle d'un véhicule comprenant une structure de surface flexible qui, au niveau d'une zone d'extrémité frontale, est fixée sur un axe d'enroulement, de façon enroulable et déroulable, et, au niveau de son autre zone d'extrémité frontale, reliée à un profilé télescopique, **caractérisé en ce que** la structure de surface, multicouche, est constituée par un tissu non tissé formant support et par une couche de matière plastique pouvant être appliquée par soudage et servant de couche de finition.

2. Dispositif de protection selon la revendication 1, **caractérisé en ce que** la couche de matière plastique est formée par une couche de PVC.

3. Dispositif de protection selon la revendication 1, **caractérisé en ce qu'**il est prévu, comme tissu non tissé formant support, un textile non tissé de type *Malivlies* ou de type *Maliwatt.*

4. Dispositif de protection selon la revendication 1, **caractérisé en ce que** la couche de matière plastique est formée par une feuille de matière plastique.

5. Dispositif de protection selon la revendication 4, **caractérisé en ce que** la feuille de matière plastique est conçue comme une feuille de PVC.

6. Dispositif de protection selon la revendication 4 ou 5, **caractérisé en ce que** la feuille de matière plastique est liée au tissu non tissé formant support, en particulier collée.

7. Dispositif de protection selon la revendication 1, **caractérisé en ce que** le tissu non tissé formant support est fabriqué en étant renforcé par aiguilletage ou par jet d'eau.

8. Dispositif de protection selon la revendication 7, **caractérisé en ce que** le tissu non tissé formant support est cousu, en outre, au moyen d'un fil à coudre.

9. Procédé de fabrication d'un dispositif de protection selon l'une quelconque des revendications précédentes, où un tissu non tissé formant support est d'abord achevé, puis est appliquée, sous forme liquide, sur le tissu non tissé formant support achevé, une couche de matière plastique servant de couche de finition et, ensuite, la structure de surface flexible, au niveau d'une zone d'extrémité frontale, est fixée sur un axe d'enroulement, de façon enroulable et déroulable, et, au niveau de son autre zone d'extrémité frontale, reliée à un profilé télescopique.

10. Procédé selon la revendication 9, **caractérisé en ce que** la couche de matière plastique est appliquée par raclage.

11. Procédé selon la revendication 9, **caractérisé en ce que** la couche de matière plastique est appliquée par extrusion.
